# DEMANDE DE BREVET EUROPEEN

(11) **EP 1 022 595 A1**
(43) Date de publication de la demande: **26.07.2000**
(21) Numéro de dépôt: 00400157.4
(22) Date de dépôt: 21.01.2000
(51) Int. Cl.: G02B 6/293, G02B 6/16, G02B 6/124

(54) **Guide optique filtrant à inclinaison et à chirp linéaire**

(30) Priorité: 25.01.1999 FR 9900758
(71) Demandeur: ALCATEL, 75008 Paris (FR)
(72) Inventeur: Riant, Isabelle, 91120 Palaiseau (FR); Sansonetti, Pierre, 91120 Palaiseau (FR)
(74) Mandataire: Smith, Bradford Lee

(57) **Abrégé**

Pour ajuster la réponse spectrale d'un filtre en transmission dans un guide optique ou dans une fibre optique, on prévoit de réaliser une section (17) de guide optique à réseau de Bragg en angle. Pour lisser la réponse du filtre qui présente une modulation due à des couplages vers les différents modes de gaine, une variation linéaire du pas du réseau de Bragg est introduite selon la longueur du filtre. Pour adapter la bande spectrale d'atténuation à une bande spectrale recherchée, on prévoit de doper la gaine (3) de la fibre optique avec un matériau photosensible de manière à réaliser le réseau d'indice (16) également dans la gaine. Avantageusement, la photosensibilité de la gaine est plus forte que celle du coeur, dans un rapport de l'ordre de 5.

## Description

La présente invention a pour objet un filtre fréquentiel pour modifier le spectre de transmission d'un guide optique. Dans l'invention le filtre fréquentiel est réalisé dans une portion de guide optique, modifiée pour lui conférer des aptitudes filtrantes. La présente invention s'appliquera aux guides optiques planaires ainsi qu'aux fibres optiques. Les principes de l'invention seront illustrés utilisant l'exemple des fibres optiques, mais l'homme du métier sera transposer cet enseignement pour l'appliquer tel quel aux guides optiques.

On connaît dans le domaine des guides optiques filtrants la réalisation de réseaux de Bragg dans des guides planaires ainsi que dans des sections de coeur des fibres optiques. Ces réseaux de Bragg sont réalisés par des changements d'indice périodiques dans le matériau du guide ou de la fibre. Ceux-ci sont obtenus par une irradiation ultraviolette effectuée dans ces guides ou dans ces sections de coeur de fibre. Le changement d'indice de réfraction provoqué par une insolation lumineuse est appelé "effet photo réfractif". Cet effet est permanent. La propriété d'un matériau ayant un indice pouvant être modifié sous une telle irradiation lumineuse est appelé, ici, photosensibilité. Les caractéristiques de photosensibilité sont liées dans la technique actuelle à la présence d'un défaut de germanium dans la matrice silice du guide ou de la fibre optique. D'autres dopants rendant le guide ou le coeur de la fibre photosensible peuvent être utilisés.

Un avantage du germanium est qu'il est normalement présent dans le coeur des fibres optiques car il permet d'augmenter l'indice de réfraction du coeur de la fibre par rapport à celui d'une gaine optique qui enrobe ce coeur. Cette augmentation d'indice, dite aussi marche d'indice, assure le guidage du signal lumineux dans le coeur de la fibre. Le même effet est utilisé pour les guides.

Lors de la fabrication d'une préforme d'une fibre optique sont successivement déposées à l'intérieur d'un tube de verre des couches différentes de silice dopée ou non devant constituer progressivement, par leur adhésion sur la paroi interne du tube, les différentes couches constituant la fibre optique. Le diamètre d'une préforme ainsi constituée est homothétiquement plus grand que le diamètre de la fibre. Celle-ci est ensuite obtenue par échauffement et étirage de la préforme.

Pour réaliser le réseau de Bragg, on soumet à une irradiation ultraviolette sélective périodique une section du guide ou du coeur de la fibre qui doit jouer le rôle de filtre. Par cette irradiation on réalise des altérations locales permanentes de l'indice de réfraction. Ces altérations sont liées à une modification chimique et structurelle des liaisons des atomes de germanium (ou d'autres dopants) dans le guide ou dans le coeur. La variation de la valeur de l'indice de réfraction du guide ou du coeur de la fibre qui résulte de ces altérations peut atteindre quelques millièmes.

Le réseau se présente alors comme une modulation de l'indice de réfraction le long de la section formant un filtre atténuant.

Classiquement, lorsque les altérations du réseau d'indice sont perpendiculaires à l'axe du guide ou de la fibre optique, la quantité de lumière non transmise par le filtre est réfléchie dans le guide ou dans le coeur de la fibre optique avec un maximum de réflexion à la longueur d'onde de Bragg déterminée par une condition de résonance. Physiquement, un couplage est créé entre le mode fondamental se propageant co-directionnellement et le mode se propageant contra-directionnellement.

Selon la longueur de la section soumise à insolation, selon la période de reproduction des altérations le long de cette section, et selon la nature plus ou moins forte de l'altération (selon la nature plus ou moins importante de la variation de l'indice de réfraction à l'endroit des altérations), on peut respectivement modifier les caractéristiques de transmission suivantes : la largeur, la fréquence centrale du filtre, et le degré d'atténuation obtenu (contraste).

Pour de fortes variations d'indice photo induites dans le coeur d'une fibre, il se produit également un couplage du mode fondamental dans des modes de gaine, à des longueurs d'onde plus courtes. Ceci peut être évité, selon l'article D1 = "Optical fiber design for strong gratings photimprinting with radiation mode suppression" présenté à la conférence OFC San Diego 1995, Post Deadline 5, de E. DELEVAQUE et al., par un dopage au germanium d'une partie de la gaine proche du coeur. Un co-dopant au fluor est ajouté dans la gaine pour rétablir la marche d'indice.

Dans une utilisation particulière, on a tenté avec de tels filtres de compenser des défauts de platitude du gain d'amplificateurs utilisés le long de liaisons optiques à très longue distance. En effet, sur de très longues distances, empruntant notamment des parcours sous-marins, l'atténuation kilométrique des ondes dans les fibres optiques est telle qu'il faut, de place en place, disposer des amplificateurs optiques. D'une manière connue ces amplificateurs présentent malheureusement l'inconvénient de favoriser, d'une manière systématique, certaines des composantes fréquentielles de la bande transmise.

Ce phénomène est d'autant plus gênant que de tels amplificateurs optiques sont utilisés dans des liaisons de type WDM (Wavelength Division Multiplexed) dans lesquelles différents canaux sont transportés par des porteuses optiques à différentes fréquences afin d'accroître la capacité globale et la modularité du système. Compte tenu du phénomène mis en jeu dans l'amplificateur optique, une telle réponse spectrale serait rédhibitoire si on ne la compensait alors pas régulièrement. Dans cette application, il s'agit surtout d'aplatir le gain des amplificateurs optiques à fibre dopée à l'erbium. D'autres applications sont bien entendu envisageables.

Ce type de filtre à réseau de Bragg présente donc l'inconvénient d'agir comme un réflecteur partiel du signal amplifié, pour les composantes concernées par le filtrage. Une partie du signal optique à ces fréquences est donc renvoyée par réflexion dans l'amplificateur optique. Il en résulte que, dans la section amplificatrice, le signal réfléchi par le filtre revient interférer, mais également que le signal rétro diffusé par la filtre est renvoyé dans la ligne venant dégrader les caractéristiques de transmission.

Pour éviter cette réflexion il a été imaginé, notamment dans l'article D2 = "Wideband gain flattened erbium fibre amplifier using a photosensitive fibre blazed grating" de R. Kashyap, R. Wyatt et R. J. Campbell et publié dans Electronics Letters du 21 janvier 1993, vol. 29, n° 2, pages 154 à 156, le principe d'incliner les franges représentatives des zones à modulation d'indice. Ceci peut être réalisé en faisant interférer deux faisceaux issus d'une source laser argon doublée en fréquence à 244 nm, et en inclinant la normale à la section servant de filtre par rapport à la bissectrice d'insolation des deux faisceaux. On peut également utiliser un masque de phase générant principalement deux ordres de diffraction +1 et -1, et un ordre zéro très faible. L'inclinaison est par exemple de huit degrés dans l'article décrit. L'avantage de l'inclinaison est de supprimer la réflexion. En effet, cette inclinaison a pour effet de coupler le mode fondamental se propageant co-directionnellement avec des modes de gaine contra directionnels. Ces modes de gaine sont très rapidement absorbés par la gaine. L'enveloppe spectrale de l'ensemble des composantes fréquentielles dans ces différents modes de gaine peut alors être utilisée comme caractéristique d'un filtre utilisé pour compenser le gain des amplificateurs optiques.

L'inconvénient présenté par cette technique se situe dans la sélectivité du filtre. En effet, en utilisant des fibres standards de télécommunication, il n'est pas possible, par exemple, avec un tel filtre à réseau de Bragg et à inclinaison des altérations, d'obtenir une bande spectrale du filtre inférieure à 20 nm. Il est possible en théorie de jouer sur le diamètre du coeur pour réduire la largeur de bande du filtre. Le filtre est ainsi plus sélectif si le diamètre de ce coeur est plus grand, par exemple 9 µm au lieu de 3µm. Mais cette augmentation du diamètre est limitée. De plus elle présente, entre autres inconvénients, celui de devoir réaliser des sections d'adaptation entre une fibre avec un coeur à grand diamètre, et une fibre avec un diamètre standard (de l'ordre déjà de 9 µm). Ces adaptations sont délicates à réaliser.

Selon le but recherché, l'atténuation par les modes de gaine est meilleure mais la longueur du réseau ne peut plus jouer pour rétrécir la largeur de bande du filtre. En pratique plus l'angle est faible et plus le filtre peut être sélectif mais en même temps plus il est le lieu d'une émission résiduelle par réflexion, du type de celle des franges droites. A l'opposé plus l'angle est incliné, moins ce phénomène de réflexion se fait sentir mais plus la largeur de bande du filtre est grande, c'est-à-dire moins il est sélectif. Le compromis obtenu dans tous les cas n'est pas satisfaisant et on cherche à l'améliorer.

Un deuxième problème de ce type de filtre est lié à un rebond de filtrage dans une bande basse fréquence, c'est à dire avec une longueur d'onde plus longue, voisine de la bande utile où a été réalisé le filtrage. Ce rebond est dû à la réflexion résiduelle, citée ci-dessus, dans le mode fondamental. Au départ, ce rebond n'est pas gênant puisque les amplificateurs optiques connus ont une bande spectrale limitée et que ce rebond de filtrage s'en trouve en dehors. Il doit néanmoins rester faible. Cependant, dans d'autres applications, notamment dans des applications terrestres, le filtre va être utilisé sélectivement, pour atténuer différentes composantes dans la bande utile. La place spectrale de ce rebond sera donc aussi dans la bande utile. Dans ces autres applications, ce rebond de filtrage est alors néfaste.

Troisièmement, on a précisé précédemment que l'atténuation spectrale n'est en fait que l'enveloppe d'atténuations à différentes composantes spectrales. Ceci signifie qu'à l'intérieur de cette enveloppe, des composantes spectrales sont effectivement filtrées, alors que d'autres le sont moins, voire pas du tout. Ceci est dû à la discrétisation des modes de gaine. Dans ces conditions, l'enveloppe de filtrage correspond à un assemblage de filtres discrets, à bande relativement étroite, et séparés les uns des autres par des espaces fréquentiels où le filtrage n'est pas réalisé. Un tel filtre ne peut donc pas être utilisé pour égaliser correctement le gain des amplificateurs optiques.

L'inconvénient du compromis évoqué ci-dessus en rapport avec l'enseignement du document D2 a été adressé par le document D3 = "Ultra Narrow Band Optical Fibre Sidetap Filters" de M.J. Holmes, R. Kashyap, R. Wyatt, et R.P. Smith, Proc. ECOC 1998, pp. 137-138, Madrid, 20-24 Septembre 1998. Selon l'enseignement de D3, afin d'accroître la sélectivité d'un filtre à réseau de Bragg, un réseau faiblement incliné est réalisé dans la gaine (et non dans le coeur) de la fibre. Grâce à l'absence de franges dans le coeur, les pertes dues à la retro réflexion dans le mode fondamental sont considérablement réduites, même à des très faibles angles d'inclinaison (3° au lieu de 8° dans D2).

Dans la demande A1 au nom de la Demanderesse, on a résolu le premier problème en faisant participer la gaine au phénomène d'interférence mis en jeu dans le filtrage. Selon l'enseignement de la demande A1, le réseau de Bragg est réalisé dans le coeur et dans la gaine. Il est donc formé sur un plus grand diamètre que le coeur de la fibre et le filtre est ainsi rendu plus sélectif. Le spectre du filtre est alors facilement contrôlable en jouant sur le diamètre de la partie de gaine qui contribue au couplage radiatif.

La présente invention concerne le troisième problème évoqué ci-dessus en rapport avec le document D2, à savoir la modulation de la réponse du filtre comme conséquence de la discrétisation des modes de gaine. En effet, pour augmenter le pouvoir filtrant (contraste) d'un filtre de Bragg, on peut imaginer soit d'augmenter l'amplitude des variations d'indice de réfraction photo induites, soit d'augmenter la longueur du filtre. La présente invention traite du problème de l'augmentation de la longueur du filtre, ce qui a pour effet néfaste un couplage plus étroit vers chacun des modes de gaine, et donc une modulation plus forte de la réponse du filtre.

L'invention a donc pour objet un guide optique filtrant à réseau de Bragg comportant une première région guidante (5), dopé avec un matériau à indice de réfraction altérable, et une deuxième région (14) autour de ladite première région guidante ; ledit réseau de Bragg étant réalisé dans le guide optique comme une succession de variations quasi périodique, avec une période voisine de ΔL, d'indice de réfraction optique δn selon la longueur (z) dudit guide ; ledit réseau étant incliné par rapport à un plan perpendiculaire à l'axe (z) de propagation de lumière dans ledit guide, caractérisée en ce que ledit réseau de Bragg comporte en outre une variation δL(z) de ladite période ΔL selon la longueur (z) dudit guide ; et en ce que ladite variation δL(z) de ladite période ΔL est une variation monotone selon la longueur (z) de ladite fibre. En d'autres termes, l'invention concerne un filtre à réseau de Bragg incliné présentant un "chirp" linéaire ("chirp étant le mot en anglais utilisé couramment par l'homme du métier pour désigner la variation du pas du réseau de Bragg).

Selon une autre réalisation préférée, l'invention porte sur un guide optique filtrant à réseau de Bragg comportant une première région guidante (5), dopé avec un matériau à indice de réfraction altérable, et une deuxième région (14) autour de ladite première région guidante ; ledit réseau de Bragg étant réalisé dans la première région guidante (5) ; comme une succession de variations quasi périodique, avec une période voisine de ΔL, d'indice de réfraction optique δn selon la longueur (z) de ladite fibre ; ledit réseau de Bragg comportant en outre une variation δL(z) de ladite période ΔL selon la longueur (z) de ladite fibre, ladite variation δL(z) de ladite période ΔL étant une variation monotone selon la longueur (z) de ladite fibre ; caractérisée en ce que ledit réseau est incliné par rapport à un plan perpendiculaire à l'axe de propagation de lumière dans ledit guide. En d'autres termes, l'invention concerne un filtre à réseau de Bragg chirpé linéairement, dans lequel le réseau est incliné.

Selon différentes réalisations, ledit réseau est d'une longueur comprise entre quelques millimètres et quelques centimètres.

Selon d'autres caractéristiques, tout ou partie de ladite deuxième région (gaine) est dopée avec un matériau à indice de réfraction altérable et ce matériau de ladite deuxième région gaine est lui aussi altéré en un réseau longitudinal d'altérations indicielles, quasi périodiques avec une période de ΔL, et inclinées, avec la même variation ("chirp") δL(z) de ladite période ΔL, monotone selon la longueur (z) de ladite fibre.

Avantageusement, l'invention peut être réalisée en incluant des caractéristiques des demandes A1 ou A2 au nom de la Demanderesse.

L'invention sera mieux comprise à la lecture de la description qui suit et de l'examen des figures qui l'accompagnent. Celles-ci ne sont données qu'à titre indicatif et nullement limitatif de l'invention. Les figures montrent :
- Figure 1 : une préforme de fibre optique utilisable pour réaliser la fibre optique filtrante de l'invention ;
- Figure 2 : la représentation d'un procédé utilisable pour préparer la fibre optique de l'invention à sa fonction filtrante ;
- Figure 3 : un diagramme fréquentiel montrant, dans une application, des défauts d'amplification d'amplificateurs optiques à fibres dopées à l'erbium, et la correction apportée par le filtre de l'invention ;
- Figure 4 : un exemple d'un profil d'indice de réfraction du coeur et de la gaine de la fibre optique filtrante de l'invention ;
- Figure 5 : un exemple d'une courbe de transmission par un filtre à réseau de Bragg incliné de courte longueur (0.7 mm) et donc de faible contraste (-0.25 dB), réalisé selon les demandes A1 à A3 au nom de la Demanderesse ;
- Figure 6 : un exemple d'une courbe de transmission par un filtre à réseau de Bragg incliné mais plus long (5 mm) pour améliorer le contraste;
- Figure 7 : comparaison du couplage, en fonction de la longueur d'onde propagée, vers un mode de gaine présenté par un réseau incliné sans chirp et avec chirp, schématiquement et à échelle arbitraire ;
- Figure 8 : un exemple d'une courbe de transmission par un filtre à réseau de Bragg incliné de longueur moyenne (5 mm) et chirpé donc de contraste plus fort (-1.5 dB), réalisé selon l'invention.
- Figure 9 : un exemple schématique d'un filtre optique à réseau de Bragg incliné et chirpé selon l'invention.

Sur toutes les figures, les mêmes références désignent les mêmes éléments . L'échelle n'est pas toujours respectée pour des raisons de clarté.

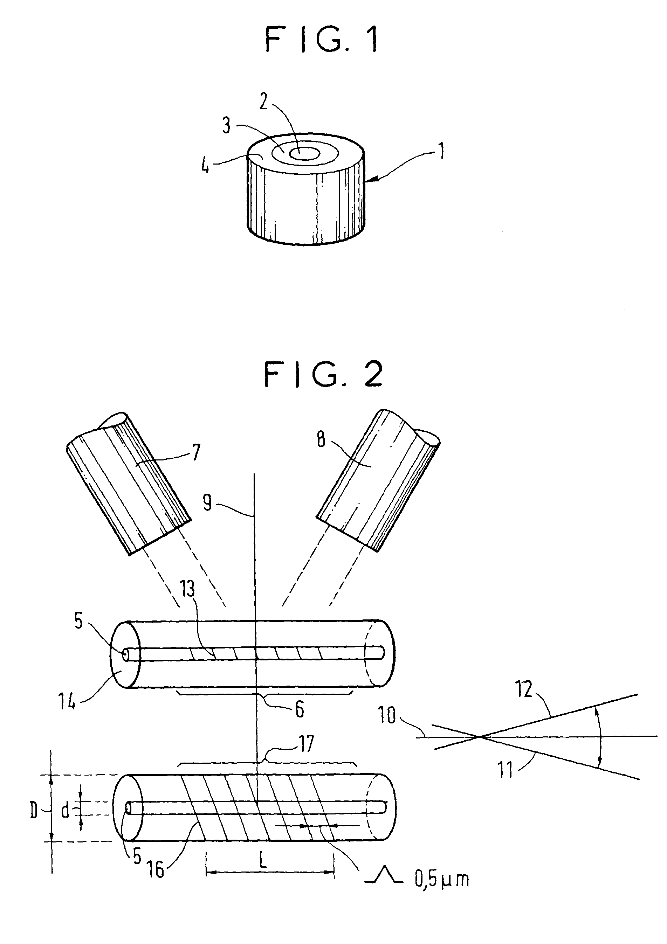

La figure 1 montre une préforme 1 de fibre optique. La préforme 1 comporte un premier cylindre 2 entouré par une couronne cylindrique intérieure 3 et une couronne cylindrique extérieure 4. Ce cylindre et ces couronnes représentent les différentes couches de matériaux présents dans la fibre optique quand elle est réalisée par étirage. Les dimensions radiales des cylindres et couronnes cylindriques 2 à 4 sont homothétiques des dimensions, bien plus faibles, des parties correspondantes dans la fibre optique, une fois qu'elle est fabriquée par étirage. En pratique, un coeur et une gaine de fibre correspondant respectivement aux couches 2 à 3 sont réalisés chacun en plusieurs couches. Les couches 2 à 3 sont ainsi dopées avec différents dopants au fur et à mesure de la réalisation de la préforme.

La figure 2 montre un procédé préféré d'insolation d'un matériau photosensible utilisable pour créer un réseau d'altérations indicielles, dit aussi réseau d'indice, à l'intérieur du coeur 5 d'une fibre. Une méthode similaire peut être utilisée pour la photo- inscription d'un réseau de Bragg à l'intérieur d'un guide optique photosensible. Dans une fibre de l'état de la technique, le coeur 5 de la fibre est dopé au moment de la fabrication du cylindre 2 avec du germanium. Ce coeur dopé germanium est soumis au moment de l'insolation, sur une longueur correspondant à une section filtrante 6, à un éclairement produit par deux faisceaux 7 et 8, issus d'une source laser cohérente, inclinés l'un par rapport à l'autre. La bissectrice 9 de l'angle que ces faisceaux forment est orientée sensiblement perpendiculairement à l'axe 10 du coeur 5. Comme rapporté dans le document D2 cité ci-dessus, les faisceaux lasers 7 et 8 peuvent être issus d'un laser argon doublé en fréquence à une longueur d'onde de 244 nm. Selon l'enseignement de ce document D2, en inclinant l'axe 10 vers des directions 11 ou 12 par rapport à la normale à la bissectrice 9, on peut obtenir que les franges d'interférence, et donc le réseau des altérations, se présentent sous une forme inclinée. On a représenté sur la figure 2, grossièrement, en coupe des tranches 13 de disques inclinées. Dans la pratique le degré d'altération évolue entre un minimum et un maximum progressivement entre chaque frange. Il n'y a pas vraiment de disques, mais la représentation est commode.

En variante, le réseau d'indice incliné peut aussi être réalisé par un dispositif à masque de phase.

Il est connu de fabriquer des coeurs 5 avec neuf micromètres de diamètre. Ainsi la fibre standard SMF-28 de Corning Incorporated, New York, Etats Unis d'Amérique, est une fibre monomode avec un tel diamètre. Les contributions des cylindres 3 et 4 forment un ensemble gaine-tube de ces fibres. Dans un exemple notamment celui indiqué ci-dessus, le diamètre extérieur D de cet ensemble est de l'ordre de 125 à 130 micromètres.

Selon une variante, et tel qu'expliqué dans les demandes antérieures A1 et A2 au nom de la Demanderesse, plutôt que de se contenter de doper le matériau 2 servant à fabriquer le coeur 5 avec du germanium on a également dopé le tout ou partie du matériau 3 composant la gaine. De ce fait, au moment de l'insolation, des franges 16 se développent non seulement dans le coeur 5 mais également dans la gaine 3. Là encore, le bas de la figure 2 est schématique, ses franges n'étant pas des disques.

La section 17 où se développent ces altérations indicielles dépend des limites d'insolation. Elle a une longueur L. Les écarts entre les maxima des différentes altérations occupent un espace ΔL (de l'ordre de 0,5 micromètres) correspondant à l'interfrange. De telles périodes permettent d'obtenir des filtres aux longueurs d'onde de l'infrarouge (environ 1,5 µm). La force de l'altération est liée à la puissance des deux faisceaux lasers 7 et 8, à la durée d'insolation et à la concentration en germanium. Ces grandeurs sont des paramètres utiles pour régler le filtre constitué par la section 17.

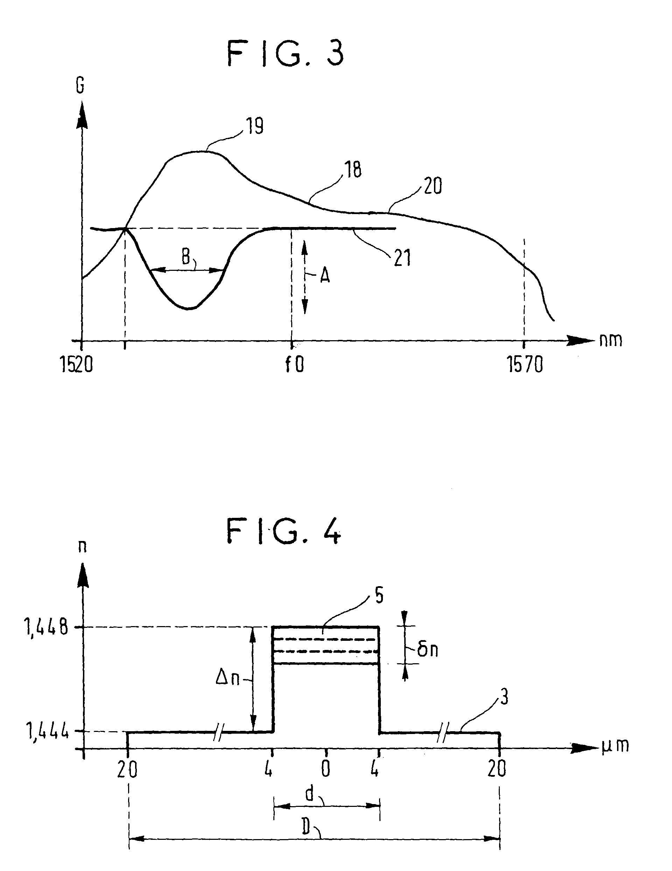

La figure 3 montre une courbe 18 représentant symboliquement, et avec quelques exagérations, les effets néfastes des amplificateurs optiques à base de fibre optique dopée à l'erbium (EDFA Erbium Doped Fibre Amplifiers). De tels amplificateurs sont intéressants parce qu'ils ont une grande bande spectrale, centrée sur les longueurs d'ondes utiles dans la transmission optique. Ils présentent cependant l'inconvénient d'imposer une sur-amplification 19 à certains endroits du spectre par rapport à l'amplification 20 à d'autres endroits du spectre. C'est cette sur-amplification 19 qu'il faut combattre avec un filtre interposé dans la propagation des ondes issues de ces amplificateurs.

La courbe 21 représente schématiquement le filtre obtenu par mise en place d'une section 17 filtrante réalisée selon la partie basse de la figure 2. Les caractéristiques du filtre sont sa longueur d'onde de Bragg f0 (légèrement supérieure à la longueur d'onde centrale du filtre), l'amplitude A de l'atténuation sélective qu'il impose, et sa largeur de bande B. D'une manière connue, f0 dépend de ΔL, A dépend du degré d'altération des matériaux photosensibles insérés dans la fibre, et, pour un réseau de Bragg classique à altérations droites, B dépend de la longueur L de la section 17. Plus la longueur L est grande plus la largeur de bande B peut être réduite.

Dans l'état de la technique avec altérations inclinées, où seul le coeur 5 de la fibre était dopé avec du germanium, la largeur de bande B était bien supérieure à la largeur de bande de la sur-amplification 19. En conséquence le filtre était mal adapté en fréquence. Pour les raisons invoquées, avec des altérations inclinées il ne servait à rien que la longueur L soit agrandie.

La figure 4 montre le profil d'indice réalisé dans une guide optique (ici une fibre) selon l'invention. Par rapport à une abscisse 0, centrale au milieu du coeur 5 de la fibre, on distingue de part et d'autre les abscisses, à quatre micromètres environ, des extrémités du diamètre du coeur 5 ainsi que les abscisses, à 20 micromètres environ, des extrémités du diamètre de la gaine 3. Le profil d'indice de réfraction est tel qu'il montre une marche Δn = n_{c} - n_{g} de l'ordre de 0,5 %. Ce profil d'indice est nécessaire pour assurer la propagation d'un seul mode fondamental optique dans le coeur de la fibre. Ce profil d'indice est obtenu en dopant le coeur de la fibre avec des matériaux ayant cette propriété d'augmentation d'indice de réfraction. Généralement, on effectue un dopage au germanium. On peut aussi utiliser du phosphore permettant également d'élever l'indice.

Le germanium présente une photosensibilité utilisable, du fait des modifications des liaisons chimiques et de la structure par insolation pour constituer le réseau d'altérations indicielles. Ainsi, le long de la section 17, l'indice de réfraction évoluera selon une variation δn progressivement et périodiquement d'une frange à l'autre. La variation δn est une fraction de Δn.

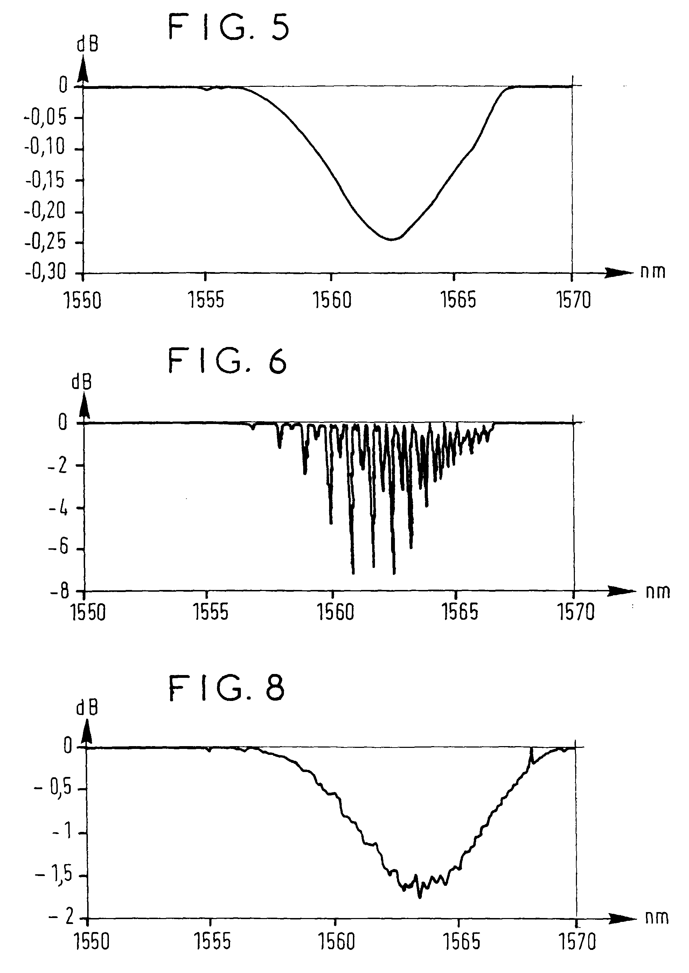

La figure 5 montre schématiquement la réponse d'un filtre selon les demandes A1 à A3, avec δn de 1.65 . 10⁻³ , longueur du filtre L = 0.7 mm, un réseau incliné de quelques degrés, et un pas uniforme (non-chirpé). On constate la forme lisse, relativement bien adaptée à celle de l'amplification 19 telle que montrée sur la figure 3, mais un très faible contraste (ou pouvoir filtrant) de l'ordre de 0.25 dB seulement.

La figure 6 montre schématiquement la réponse d'un filtre ayant les mêmes paramètres de fabrication, sauf allongé à une longueur L de 5 mm pour tenter d'améliorer le contraste du filtre. On voit la modulation due à la discrétisation de la réponse, due à une diminution de la largeur spectrale du couplage vers chaque mode de gaine avec la longueur du filtre. Ce filtre est inutilisable pour les applications visées.

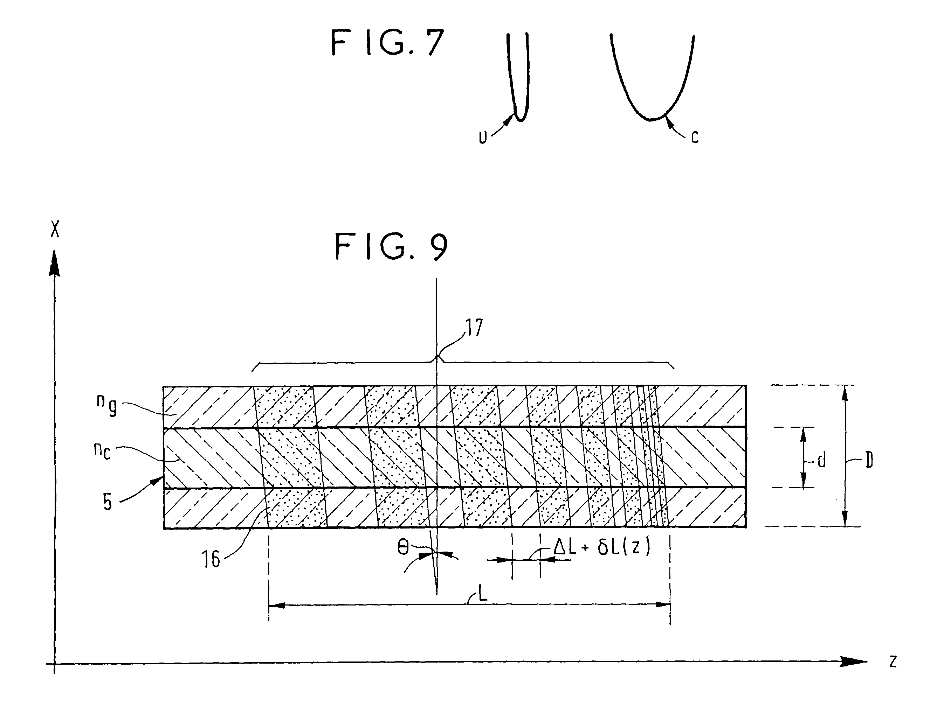

La figure 7 montre schématiquement la forme spectrale du couplage vers un seul mode de gaine, à gauche pour un réseau incliné, d'une longueur de quelques millimètres, mais à pas constant ; et à droite pour un réseau selon l'invention de la même inclinaison et la même longueur, mais à pas variable selon la longueur (z) du filtre (chirpé). L'élargissement du spectre de couplage vers chaque mode de gaine permet de lisser la courbe de réponse de la figure 6.

La figure 8 montre schématiquement un exemple de la courbe de réponse d'un exemple d'un filtre selon l'invention. Les paramètres de fabrication de ce filtre sont identiques aux ceux du filtre de la figure 6, sauf que le réseau ici est à pas variable selon la longueur (z) du filtre (chirpé). On constate que la modulation due au couplage avec les modes de gaine visible dans la figure 6 est éliminée, alors que les deux filtres sont de la même longueur. En revanche, on constate une nette amélioration du contraste (pouvoir filtrant) du filtre selon l'invention par rapport au filtre court de la figure 5, car la plus forte atténuation est d'au moins -1.5 dB, à comparer à -0.25 dB pour le filtre court.

La figure 9 montre schématiquement la géométrie d'un filtre à réseau incliné et chirpé selon l'invention. On y voit les mêmes références que sur la figure 2. A titre d'exemple, les différents paramètres pourraient avoir les valeurs suivantes :
- L'indice de réfraction du coeur n_{c} = 1.444
- L'indice de réfraction de la gaine n_{g} = 1.449
- La marche d'indice Δn = n_{c} - n_{g} = 5 . 10⁻³
- Le diamètre du coeur d = 8 µm
- Le diamètre de la gaine D = 125 µm
- La longueur du filtre photo inscrit L = 5 mm
- L'inclinaison du filtre Θ = 4°
- Le pas nominal du réseau de Bragg ΔL = 540 nm
- La longueur d'onde de Bragg correspondante Λ_{B} = 1562 nm
- La valeur du chirp linéaire δL(z) = 0.2 nm / mm.

Comme expliqué précédemment, le choix des valeurs de ces différents paramètres permet au concepteur du filtre d'accorder la longueur d'onde centrale et la réponse spectrale du filtre à un amplificateur optique à fibre dopée erbium, par exemple. Mais on peut imaginer adapter un filtre selon l'invention à n'importe quelle autre source de lumière, ou n'importe quel autre problème spectral à résoudre. La longueur du filtre peut être ajustée pour obtenir le contraste voulu, alors que l'angle d'inclinaison doit être ajusté afin de régler la largeur spectrale du filtre. Comme dans les demandes antérieures A1, A2, A3 au nom de la demanderesse, différents profils d'indice coeur / gaine, et différents dopages photosensibles coeur / gaine peuvent être utilisés, pour favoriser ou au contraire, supprimer une partie du couplage vers les modes de gaine.

L'invention a été illustrée utilisant l'exemple non-limitatif d'une fibre optique comme guide optique. L'homme de l'art saura généraliser cet exemple pour l'appliquer à toute sorte de guide optique, notamment des guides planaires formés sur substrat, par exemple de silice.

## Revendications

1. Guide optique filtrant à réseau de Bragg comportant une première région guidante (5), dopé avec un matériau à indice de réfraction altérable, et une deuxième région (14) autour de ladite première région ; ledit réseau de Bragg étant réalisé dans ladite première région comme une succession de variations quasi périodique, avec une période voisine de ΔL, d'indice de réfraction optique δn selon la longueur (z) de ladite fibre ; ledit réseau étant incliné par rapport à un plan perpendiculaire à l'axe (z) de propagation de lumière dans ledit guide ; ledit réseau de Bragg comportant en outre une variation δL(z) de ladite période ΔL selon la longueur (z) dudit guide ; ladite variation δL(z) de ladite période ΔL étant une variation monotone selon la longueur (z) de ladite fibre ; caractérisée en ce que tout ou partie de ladite deuxième région est dopée avec un matériau à indice de réfraction altérable et que cette deuxième région est elle aussi altérée en un réseau longitudinal d'altérations indicielles, quasi périodiques avec une période de ΔL, et inclinées, avec la même variation δL(z) de ladite période ΔL, monotone selon la longueur (z) dudit guide.

2. Guide optique filtrant à réseau de Bragg selon la revendication 1, caractérisée en ce que ladite variation δL(z) de ladite période ΔL, est linéaire selon la longueur (z) dudit guide.

3. Guide optique filtrant à réseau de Bragg selon l'une quelconque des revendications 1 à 2, caractérisée en ce que ledit réseau est d'une longueur comprise entre quelques millimètres et quelques centimètres.

4. Guide optique filtrant à réseau de Bragg selon l'une quelconque des revendications 1 à 3, caractérisée en ce que ledit guide optique est une fibre optique, ladite première région est le coeur (5) de ladite fibre, et ladite deuxième région est la gaine (14) de ladite fibre optique.

5. Guide optique filtrant à réseau de Bragg selon la revendication 4, caractérisée en ce que le matériau de la gaine est dopé par un matériau correcteur d'indice de réfraction.

6. Guide optique filtrant à réseau de Bragg selon la revendication 5, caractérisée en ce que le matériau correcteur est du fluor.

7. Guide optique filtrant à réseau de Bragg selon la revendication 6, caractérisée en ce que le matériau correcteur est le bore.

8. Guide optique filtrant à réseau de Bragg selon l'une des revendications 4 à 7, caractérisée en ce qu'une partie interne de la fibre présente une photosensibilité psᵢₙ inférieure à la photosensibilité psₑₓ d'une partie externe à cette partie interne.

9. Fibre selon la revendication 8, caractérisée en ce que le matériau du coeur est dopé par un matériau correcteur d'indice de réfraction.

10. Fibre selon la revendication 9, caractérisée en ce que le matériau correcteur est du phosphore.

11. Fibre selon la revendication 9, caractérisée en ce que le matériau correcteur est de l'aluminium.

12. Fibre selon l'une quelconque des revendications 8 à 11, caractérisée en ce que les parties interne et externe sont respectivement placées dans le coeur et dans la gaine de la fibre.

13. Fibre selon l'une quelconque des revendications 8 à 11, caractérisée en ce que les parties internes et externes sont placées dans le coeur de la fibre.
